# EUROPEAN PATENT APPLICATION

(11) **EP 4 564 195 A1**
(43) Date of publication of application: **04.06.2025**
(21) Application number: 23213588.9
(22) Date of filing: 01.12.2023
(51) Int. Cl.: G06F 16/957

(54) **COMPUTER-IMPLEMENTED METHOD OF TRANSFERRING DATA BETWEEN REMOTE SERVICES**

(71) Applicant: mana GmbH, 90763 Fürth (DE)
(72) Inventor: Rau, Manuel, 90763 Fürth (DE); Becker, Dominik, 90763 Fürth (DE); Tabibi, Nawid, 90763 Fürth (DE)
(74) Representative: Mzb PartmbB

(57) **Abstract**

The method receives data from a first remote service (3) and sends data to a second remote service (4) via a local program (1) such as a browser plug-in, using a local storage (2) as illustrated in [Fig.1]. This automates the transfer performed by the user (5) from web pages to web forms as well as API calls, including mapping and adaptations of data items and their format, enforcing technical limitations on the amount of transferred data, and offers the user control elements to steer the transfer and a step to review and change data before sending. It uses existing authentication tokens and offers persistent storage of sent data and the corresponding response from the second remote service for later re-use. It enables modifications of the local program, either manually, semi-automatically, or automatically by generative AI.

## Description

### Technical Field

Often, a remote service provided via the internet or within a local network, such as software-as-a-service (SaaS), databases, or social media platforms, require data that is already available from some other such remote service. Typical scenarios where this is important include migration or regular synchronization of information. The invention relates to the transfer of data between different remote services via a local computer.

### Background Art

There are several approaches to transfer data between different services, the simplest requiring the user to manually re-enter or copy & paste items seen in one service into another one, e. g. by a web form. When automation via a computer program is required, the transfer is generally realized through corresponding application programming interfaces (APIs) (cf. https://blog.dreamfactory.com/digital-transformation-a-guide-to-apis-and-microservice s). Direct API connections to a service are usually offered by the company that provides this service, including documentation (e. g. https://customerapi.clockin.de/v1/doc). Meanwhile, third-party companies have evolved which provide additional services to access certain data from one service and map it to other services using the existing user authentication (e. g. https://www.zapier.com).

Mapping the -- often unstructured -- data sent by a service usually needs human interpretation, such as the understanding of the context in which the data is presented and/or structured. An example would be personal information such as the name that is only obvious through prominent placement on a page provided by a social media platform. Another example is a variation of key-value-pairs in which the key to the same value in the first service is different to the one in the second service (e. g. "email" vs. "mailingAddress").

Recent advancements in the field of artificial intelligence (AI) allow computer programs to interpret the context of unstructured data and process it accordingly. In addition, generative AI with their underlying large language models (LLMs), are now capable of writing the necessary code to map data correctly. Both methods can be used to write corresponding programs.

Remote services are usually employed via computer programs such as browsers like "Google Chrome", "Microsoft Edge", and "Mozilla Firefox", which allow additional software to be installed to extend their native functionality, referred to as browser extensions, plug-ins or add-ons. Providing such browser extensions requires one version for each web browser to ensure availability and compatibility, but this problem is reduced by the widespread adoption of "Chromium", which allows for common versions that can be used in many browsers.

### Summary of Invention

The invented method creates a connection between remote services on a local computer, receiving and sending their data via a local program such as a browser with a corresponding plug-in. It takes advantage of the existing user authentication and trust models of those services, keeping the data in an internal storage. The method gives the user full control over the transfer of the data and uses advancements in the field of generative AI to reduce the manual effort of programming, maintaining, and expanding the transfer's functionality.

### Technical Problem

Creating an API between services usually requires those services to authenticate against each other as well as authorizing the access to certain data. Therefore, the user depends heavily on the two services establishing this connection.

Using a third service from another provider to transfer data between two services requires the data to be sent to this third party, raising data privacy concerns especially for personal and sensitive data. This option might not be available due to legal constraints, especially when the third-party service is located in other countries with deviating data privacy regulations such as the EU and North America.

The maintenance effort for existing computer-implemented methods of transferring data between remote services is extremely high. It can even be increased by the remote services, e. g. through continually restructuring the data.

### Solution to Problem

Automating the manual copy & paste process performed by the user from web pages to web forms as well as API calls to receive and send data using a local storage by a local program, e. g. a browser extension.

Mapping received contents to corresponding items to be sent, including adaptations to the expected data format.

Enforcing technical limitations (quotas) on the amount of transferred data.

Offering the user control elements to steer the transfer and a step to review and change data before sending it.

Making use of existing authentication tokens for receiving and sending data.

Offering the user persistent storage of the data to be sent -- as well as of the corresponding response from the remote service it is sent to -- for later re-use.

Enabling modifications of the local program either manually, semi-automatically, or automatically by generative AI.

### Advantageous Effects of Invention

In contrast to existing methods that imply access to the transferred data by additional remote services, the invention does not impair the user's data sovereignty. The method makes the user independent of help from the remote services as well as from third-party services. Data privacy concerns are solved as the data as well as the program code stays local on the computer and in the executing program.

### Brief Description of Drawings

[Fig.1] gives an abstract overview of the involved entities (1, 2, 3, 4, 5), indicating the main flow of data and the interaction with the user (5) by arrows.
[Fig.2] shows a part of typical data sent by a first remote service (3), in this example in a web page presented by a web browser.
[Fig.3] shows a part of a web form that an exemplary second remote service (4) provides to send data, before data items have been filled in.
[Fig.4] depicts the same part of a web form as [Fig.3], after some data items have been filled by the local program (1).

### Description of Embodiments

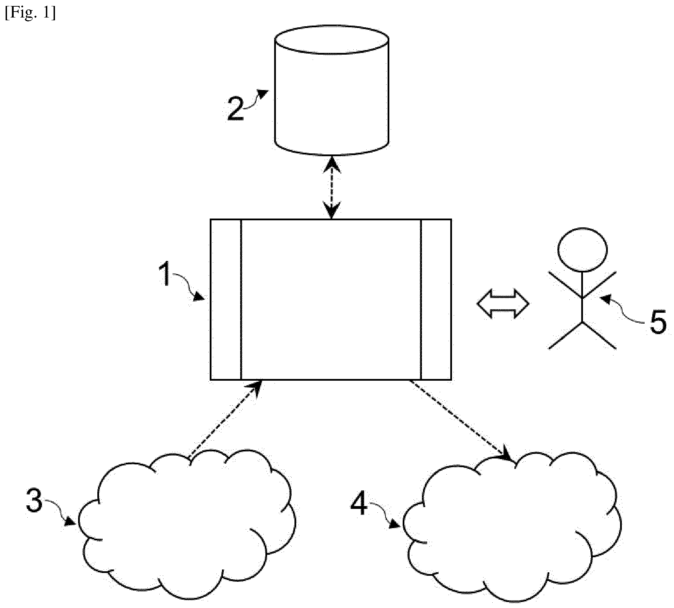

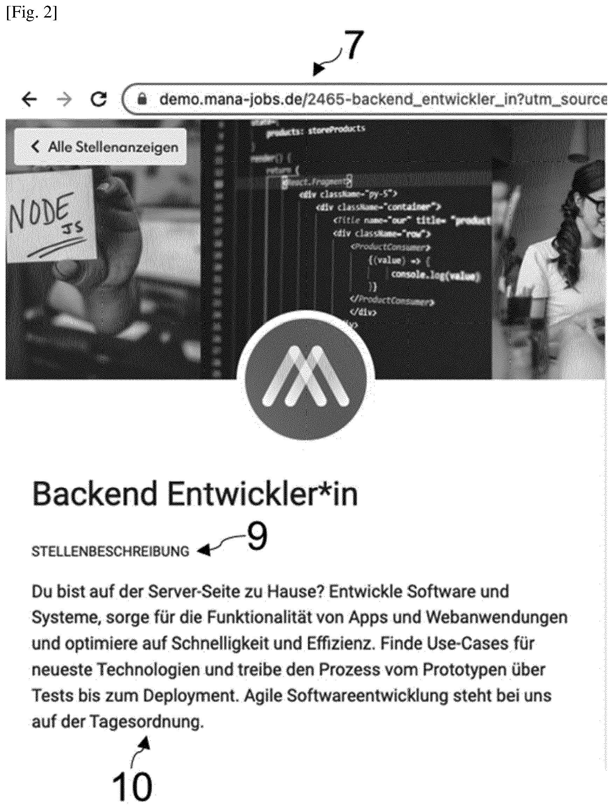

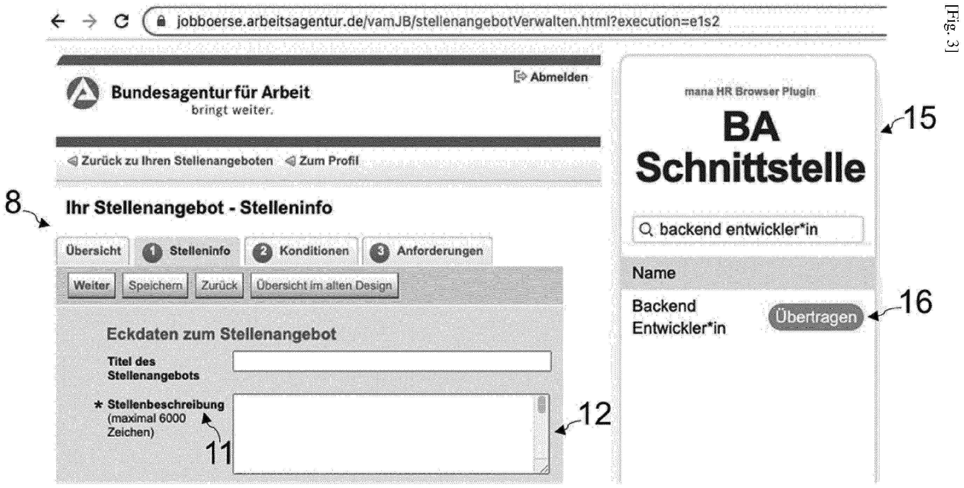

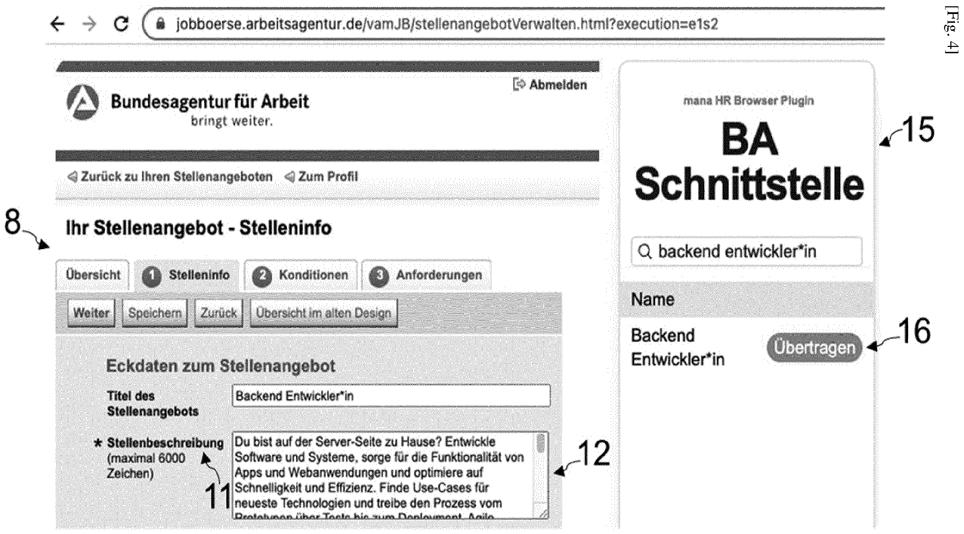

In a preferred embodiment, the local program (1) is implemented as a web browser extension or plug-in, that the user (5) installs before applying the method as per the invention, using resources provided by the web browser for the local storage (2), for sending and receiving data to and from the remote services (3, 4) and for the graphical user interface towards the user (5). Alternatively, the local program (1) can be provided as a standalone implementation that performs all necessary tasks itself. [Fig.1] gives an abstract overview that applies to any embodiment, while [Fig.2], [Fig.3], and [Fig.4] illustrate the user interaction for the example of an embodiment that employs a web browser.

Typically, the remote services (3, 4) require authentication, e. g. by asking the user (5) to enter login information and derive authorizations based on that. The local program (1) makes use of this when performing the method, either implicitly or by keeping the authentication tokens for the remote services (3, 4) in the local storage (2) and retrieving them during execution of the data transfer.

A typical way that the first remote service (3) uses to send a dataset is a web page (7) as illustrated in [Fig.2]. Each item of the dataset is usually visible as a block of many characters, e. g. a string comprising many words (10) within a context that indicates the meaning of the characters, e. g. by a field name (9) above or besides the block, or by the position on the page. Alternatively, one or more datasets can be received directly by the local program (1), e. g. using HTTP GET requests, without displaying each dataset.

The local program (1) analyzes the received data to derive their structure, e. g. by mapping the field name (9) to one of many predefined field names, identifying the datatype, such as "string", and corresponding contents, such as the text string (10), to collect individual data items in the set and stores them in the local storage (2). When the alternative of direct receiving is chosen, this structure is usually known and the data items can be derived without analysis.

A second remote service (4) will typically present a web form (8) that the user (5) should fill with the data to be sent, as depicted in [Fig.3]. Alternatively, datasets can be sent directly via e. g. HTTP POST request. The local program (1) offers, preferably in an area besides the form (15), one or more control elements (16) to the user (5), e. g. to start the transfer of one of many datasets that have been stored in the local storage (2).

The local program (1) analyzes the context, e. g. the web form (8), to derive its structure, e. g. by mapping the field name (11) to one of the predefined field names, identifying the expected datatype, such as "string" or "multiple choice selection", and the corresponding input field (12). When the alternative of direct sending is chosen, this structure is usually known and the data items can be derived without analysis.

Under control of the user (5), e. g. by activation of a control element (16), the local program (1) transfers data items to the second remote service (4), e. g. by automatically entering the contents for each data item from the local storage (2) into the corresponding field (12) of the web form (8), converting them to the expected datatype, if necessary, which might involve operations such as selecting a multiple choice option in the web form (8) that matches a string content.

The local program (1) will preferably present all transferred data to the user (5) and allow the user (5) to check and modify them before sending them to the second remote service (4), e. g. with the usual "submit" button of the web form (8).

The amount of data transferred by the local program can be limited by a quota that is purchased by the user, to enable commercial use of the method.

The local program (1) can offer a function to store the transferred data persistently, e. g. by an additional control element near the "submit" button of the form. The persistent data can be re-sent to the second remote service (4) later without receiving them again from the first remote service (3).

The local program (1) can offer a function to store the response of the second remote service (4), such as a list of links (URLs) as search results, persistently. The persistent data can be used later without receiving them again from the second remote service (4).

Embodiments of the invention can also support modification of the local program, e. g. when the mapping has rendered incomplete or incorrect results due to changes in the remote services (3, 4). The outcome of a modification is shown to the user in test runs, allowing for further modifications until the results are accepted. The modifications will then preferably be submitted to a source code repository as a merge request and reviewed, e. g. by the provider of the browser extension or by peer users, before being merged and distributed as an update to all users.

The modifications can be done manually by the user (5), or the local program (1) can assemble a prompt and feed it to a generative artificial intelligence engine that preferably runs locally. The prompt contains inter alia snippets of the original source code and directions what needs to be modified, e. g. by describing the incorrect mapping and example code snippets to ensure continuity and coding styles. The assembly of the prompt can be controlled by the user (5) in multiple choice decisions that result in predefined prompt portions, or by textual input.

### Industrial Applicability

The invention is applicable, inter alia, throughout many industry branches that require transfer from one remote service to another, like recruitment and social networking platforms, for both own and third-party services.

### Reference Signs List

| Reference sign | Description |
|---|---|
| 1 | Local program |
| 2 | Local storage |
| 3 | First remote service |
| 4 | Second remote service |
| 5 | User |
| 7 | Web page presented by first remote service |
| 8 | Web form presented by second remote service |
| 9 | Word sent by first remote service (field name) |
| 10 | Block of characters (contents) |
| 11 | Word sent by second remote service (field name) |
| 12 | Input field (datatype "string") |
| 15 | User interface of internal program |
| 16 | Control element to start transfer |

## Claims

1. Computer-implemented method of transferring data between different remote services by means of a local computer program (1) and local storage (2), comprising
for a first remote service (3), storing a plurality of received data items in the local storage (2) and
for a second remote service (4), retrieving data items from the local storage (2) and sending them in a possibly changed format and structure,
**characterized in,**
for each data item received from the first remote service (3), deriving the context such as field name and data format, preferably by analyzing related data downloaded from the first remote service (3), storing the data item together with its context in the local storage (2), for each data item to be sent to the second remote service (4), deriving the context such as field name and data format, preferably by analyzing related data downloaded from the second remote service (4), mapping it to one of the data items in the local storage (2), adapting it to its context in the second remote service (4) such as the data format,
and sending it to the second remote service under control of a user (5).

2. Method of any of the preceding claims wherein
the first remote service (3) and the second remote service (4) send and receive data via a web browser and
the local computer program (1) with the local storage (2) is implemented as an extension to the web browser.

3. Method of any of the preceding claims wherein
the amount of data that can be transferred is limited by a quota purchased by the user (5).

4. Method of any of the preceding claims wherein
the data items to be sent are presented to the user (5) for review before being sent to the second service (4) and can be manually changed.

5. Method of any of the preceding claims wherein
the data items can be stored persistently under control of the user (5).

6. Method of any of the preceding claims wherein
the data received from the first remote service (3) are represented in web pages.

7. Method of any of the preceding claims wherein
the data sent to the second remote service (4) are represented in web forms.

8. Method of any of the preceding claims wherein
authentication tokens for the remote services (3, 4) are kept in the local storage (2) and retrieved for execution of the data transfer.

9. Method of any of the preceding claims wherein
responses received from the second remote service (4) can be stored persistently under control of the user (5).

10. Method of any of the preceding claims wherein
the local program (1) is modified under control of the user (5), preferably when the mapping has rendered incomplete or incorrect results due to changes in the remote services (3, 4).

11. Method of the preceding claim wherein
the local program (1) is modified under control of the user, by generative artificial intelligence mechanisms with a prompt assembled from predefined text and text entered by the user (5), preferably describing the desired modifications such as new functionalities.

12. Method of the preceding claim wherein
the predefined text in the prompt is chosen by the user (5) by means of a decision tree, preferably by answering one or more multiple-choice questions.

13. Data processing apparatus comprising means for carrying out the method of any of the preceding claims.

14. Computer program comprising instructions which, when the program is executed by a computer, cause the computer to carry out the method of any of the preceding method claims.

15. Data carrier signal carrying the program of the previous claim.
